# EUROPÄISCHE PATENTANMELDUNG

(11) **EP 2 143 931 A2**
(43) Veröffentlichungstag der Anmeldung: **13.01.2010**
(21) Anmeldenummer: 09008967.3
(22) Anmeldetag: 09.07.2009
(51) Int. Cl.: F02M 25/07

(54) **AGR-Ventil-System**

(30) Priorität: 10.07.2008 DE 102008032436
(71) Anmelder: Hirschmann Automotive GmbH, 6830 Rankweil-Brederis (AT)
(72) Erfinder: Dengler, Werner, 6714 Nüziders (AT)
(74) Vertreter: Greif, Thomas

(57) **Zusammenfassung**

Die Erfindung betrifft ein Abgasruckführventii (1) einer Brennkraftmaschine, das ein Gehäuse mit einem Einlass (2) für die Zufuhr von Abgas der Brennkraftmaschine und mit zumindest einem Auslass (3, 4) für die Rückführung eines Teiles des Abgases in die Verbrennungsluftzufuhr der Brennkraftmaschine aufweist, wobei eine Verbindung zwischen dem Einlass (2) und dem zumindest einen Auslass (3, 4) von einem Ventilkörper freigegeben oder unterbrochen werden kann und ein Stellantrieb vorgesehen Ist, der den Ventilkörper bewegt, um die Verbindung zwischen dem Einlass (2) und dem zumindest einen Auslass (3, 4) freizugeben oder zu unterbrechen, wobei erfindungsgemäß vorgesehen ist, dass die Öffnung (5) des Einlasses (2) und die Öffnung (6, 7) des zumindest einen Auslasses (3, 4) in Ebenen (10, 11) planparallel zueinander oder In einer Ebene (12) angeordnet sind und der Ventilkörper als eine Dichtscheibe (8) ausgebildet ist, die dazu ausgebildet Ist, die Öffnung (5) des Einlasses (2) und die Öffnung (6, 7) des zumindest einen Auslasses (3, 4) freizugeben oder zu verschliessen, um die Verbindung zwischen dem Einlass (2) und dem zumindest einen Auslass (3, 4) freizugeben oder zu unterbrechen.

## Beschreibung

Die Erfindung betrifft ein Abgasrückführventil (AGR-Ventil) einer Brennkraftmaschine, das ein Gehäuse mit einem Einlass für die Zufuhr von Abgas der Brennkraftmaschine und mit zumindest einem Auslass für die Rückführung eines Teils des Abgases in die Verbrennungsluftzufuhr der Brennkraftmaschine aufweist, wobei eine Verbindung zwischen dem Einlass und dem zumindest einen Auslass von einem Ventilkörper freigegeben oder unterbrochen werden kann und ein Stellantrieb vorgesehen ist, der den Ventilkörper bewegt, um die Verbindung zwischen dem Einlass und dem zumindest einen Auslass freizugeben oder zu unterbrechen, gemäß den Merkmalen des Oberbegriffes des Patentanspruches 1.

Die Abgasrückführung (AGR) wird zur Minderung von Stickoxyden verwendet, welche bei der Verbrennung von Kraftstoff in Brennkraftmaschinen, wie Otto- oder Dieselmotoren, entstehen. Diese Reduktion ist erforderlich, um insbesondere die heute vorgeschriebenen Emissionsgrenzwerte einzuhalten. In Dieselmotoren dienen sie zusätzlich der Geräuschreduzierung, wohingegen in Ottomotoren auf Grund der Abgasrückführung die Senkung des Kraftstoffverbrauches möglich ist. Bei hohen Verbrennungstemperaturen entstehen in der Brennkraftmaschine zunehmend umweltschädliche Stickoxyde. Zwecks Reduzierung dieser muss die Verbrennungstemperatur gesenkt werden, so dass ein Teil des Abgases der Brennkraftmaschine deshalb im Teillastbereich über eine Verbindung zum Ansaugtrakt der Brennkraftmaschine der angesaugten Frischluft zugemischt wird. Die Regelung hierzu übernimmt ein außerhalb des Motors angebrachtes Abgasrückführventil (externe Abgasrückführung), welches einen Einlass aufweist, dem das Abgas der Brennkraftmaschine zugeführt wird und das einen Ventilkörper aufweist, in Abhängigkeit dessen Stellung das Abgas dem Ansaugtrakt der Brennkraftmaschine zugeführt wird, so dass der Teil des Abgases im Teillastbereich der angesaugten Frischluft zugemischt werden kann.

Zur Realisierung dieser Abgasrückführung sind schon Abgasrückführventile bekannt geworden, denen aus dem Verbrennungstrakt der Brennkraftmaschine das Abgas zugeführt wird, wobei mittels des Abgasrückführventils ein Teil des Abgases über ein oder zwei Auslässe des Abgasrückführventils dem Ansaustrakt der Brennkraftmaschine zugeführt wird. Diese Abgasrückführventile haben einen Stellantrieb, der von einem Steuergerät in Abhängigkeit von den Parametern der Brennkraftmaschine betrieben wird. Damit kann geregelt werden, in welcher Menge das dem Abgasrückführventil zugeführte Abgas dem Ansaugtrakt der Brennkraftmaschine zugeführt werden kann.

Bekannte Abgasrückführventile weisen ein Gehäuse auf, das einen Einlass aufweist, wobei weiterhin ein oder zwei Auslässe vorgesehen sind. Dabei sind der Einlass für das Abgas und der eine Auslass oder die beiden Auslässe etwa im rechten Winkel zueinander angeordnet, wobei innerhalb des Gehäuses eine von einem Stellantrieb bewegbare Kolbenstange gelagert ist, auf der beabstandet zueinander zwei Scheiben angeordnet sind, die in dem Inneren des zylinderförmigen Gehäuses bewegbar angeordnet sind. Durch die axiale Verschiebung dieser beiden Ventilkörper wird die Verbindung zwischen dem Einlass und dem Auslass (oder den beiden Auslässen) entweder vollständig unterbrochen (keine Abgasrückführung) oder teilweise oder vollständig freigegeben (teilweise oder vollständige Rückführung des dem Abgasrückführventil zugeführten Abgases). Ein solcher Aufbau hat jedoch den Nachteil, dass sehr enge Toleranzen eingehalten werden müssen, damit die beiden axial in dem Gehäuse des Abgasrückführventils bewegbaren Dichtscheiben innerhalb des Gehäuses radial umlaufend an dessen Innenfläche dichtend zur Anlage kommen, wenn die Verbindung zwischen Ein- und dem Auslass vollständig abgedichtet und dementsprechend unterbrochen werden soll.

Ältere Abgasrückführventile bestehen aus Bypassklappe und Abgasrückführventil. Sie beinhalten somit die Sensorik zur Erfassung der Position des Ventilkörpers innerhalb des Abgasrückführventils wie auch zwei Aktuatoren. Dieser Aufwand spiegelt sich in den Kosten wider.

Neuere Generationen, wie eingangs beschrieben, vereinen beide Aktuatoren in einem 1/2-Wegeventil, welches mittels Kolben und Kolbenstange jeweils eine der beiden Funktionen Bypass oder Abgasrückführung linear ansteuert. Der Aufwand reduziert sich auf die Sensorik und lediglich einen Aktuator. Problematisch sind in diesem Zusammenhang mit der so genannten "Fail Safe"-Funktion die hohen Stell- und Rückstellkräfte, wie auch die kostenintensive Abdichtung der einzelnen Ventilkreisläufe durch hochpräzise Kolben, Ventilkörper und Ventilsitze. Die "Fail-Safe"-Funktion ist erforderlich, damit z.B. bei einem Ausfall des Stellantriebes die Verbindung zwischen dem Einlass und dem Auslass unterbrochen (geschlossen) wird, damit die Brennkraftmaschine jetzt ohne Abgasrückführung weiter betrieben werden kann.

Der Erfindung liegt daher die Aufgabe zugrunde, die eingangs geschilderten Nachteile zu vermeiden und ein System für eine Abgasrückführung einer Brennkraftmaschine, insbesondere ein Abgasrückführventil, bereit zu stellen, welches ein 1/2-Wegeventil integriert und gleichzeitig eine Reduzierung der Stellkräfte bietet. Weiter muss das System kostengünstiger und fehlertoleranter bezüglich Verschleiß und Dichtigkeit gegenüber bekannten Systemen sein. Außerdem soll es an verschiedene Kennlinien anpassbar sein. Die weitere Bereitstellung einer "Fail-Safe" Funktion mit reduzierten Rückstellkräften ist dabei ebenso notwendig.

Diese Aufgabe ist durch die Merkmale des Patentanspruches 1 gelöst.

Erfindungsgemäß ist vorgesehen, dass die Öffnung des Einlasses und die Öffnung des zumindest einen Auslasses, vorzugsweise zwei Auslässe, in Ebenen planparallel zueinander oder in einer Ebene angeordnet sind und der Ventilkörper als eine Dichtscheibe ausgebildet ist, die dazu ausgebildet ist, die Öffnung des Einlasses und die Öffnung des zumindest einen Auslasses freizugeben oder zu verschließen, um die Verbindung zwischen dem Einlass und dem zumindest einen Auslass freizugeben oder zu unterbrechen.

Die hier dargestellte Lösung besteht somit aus einem Ventilkörper (Dichtscheibe) und einem Gehäuse des Abgasrückführventils mit den zwei, vorzugsweise drei, notwendigen Zu- bzw. Abgängen. An Stelle eines Kolbens, wie er im Stand der Technik bekannt ist, wird eine Dichtscheibe (Scheibendichtung), vorzugsweise aus einem Keramikwerkstoff, eingesetzt. Die Dichtfunktion ist bereits durch planes Aufliegen auf den Öffnungen der Ein- und Auslässe (vorzugsweise ausgebildet als Kanäle) gewährleistet. Eine Rundum-Dichtheit, wie bei Kolben üblich, entfällt hier in vorteilhafter Weise und Toleranzen durch Temperaturen, Vibrationen und dergleichen können ohne weiteres ausgeglichen werden.

Die Erfindung wird in vorteilhafter Weise durch die Merkmale der Unteransprüche weitergebildet, die im Folgenden beschrieben und anhand der Figuren weiter erläutert werden.

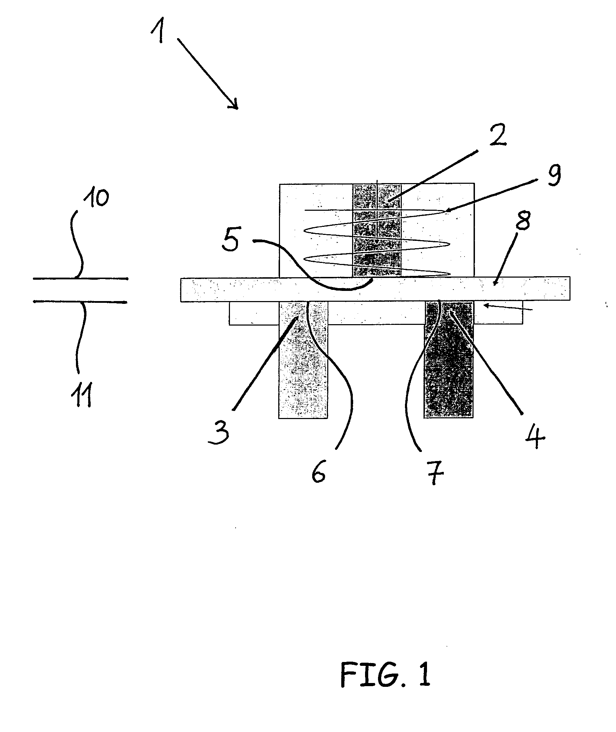

Die Figuren 1 bis 3 zeigen, soweit im Einzelnen dargestellt, den schematischen Aufbau eines Abgasrückführventils mit einem nicht näher dargestellten Gehäuse, vorzugsweise mit einem Gehäuse aus einem metallischen Druckgusswerkstoff. Das nicht dargestellte Gehäuse des Abgasrückführventils 1 weist einen Einlass 2 und zumindest einen weiteren Auslass, vorzugsweise zwei Auslässe, 3, 4 (Bypass und AGR-Kreislauf) auf. Der Einlass 2 sowie Auslässe 3, 4, sind vorzugsweise als Kanäle ausgebildet und über entsprechende Mittel mit dem Ansaug- und dem Abgastrakt der Brennkraftmaschine verbunden. Der Einlass 2 weist eine Öffnung 5 auf, wobei weiterhin der zumindest eine Auslass, vorzugsweise die beiden Auslässe 3, 4, ebenfalls entsprechende Öffnungen 6, 7, aufweisen.

Bei dem Ausführungsbeispiel gemäß Figur 1 sind die Öffnungen 5, 6, 7 von einer Dichtscheibe 8 verschließbar oder freigebbar und in Ebenen 10, 11 planparallel zueinander angeordnet. Das heißt, dass die AGR- und Bypasskanäle sich, bezogen auf den Einlass 2, auf der gegenüber liegenden Seite der Dichtscheibe 8, vorzugsweise aus einem Keramikwerkstoff, befinden. Hier kann der Abgasdruck die Auflagekraft auf den Dichtflächen der Öffnungen 5, 6, 7 und damit die Dichtheit unterstützen.

Das heißt, dass bei diesem Ausführungsbeispiel die Öffnung 5 des Einlasses 2 auf der einen Seite der Dichtscheibe 8 und die Öffnung 6, 7 des zumindest einen weiteren Auslasses 3, 4 auf der anderen Seite der Dichtscheibe 8 angeordnet ist.

Zur Unterstützung der Abdichtung der Öffnungen, insbesondere der Öffnungen 6, 7, und zur Realisierung der "Fail-Safe"-Funktion ist die Dichtscheibe 8 vorgespannt, was beispielsweise mittels einer Feder 9, vorzugsweise einer Spiralfeder, erfolgen kann. Mittels dieser Feder ist es möglich, dass bei einem Ausfall des elektrischen, hydraulischen oder pneumatischen Stellantriebes (hier nicht dargestellt) die Verbindung zwischen dem Einlass 2 und dem zumindest weiteren Auslass 3, 4 unterbrochen wird, so dass kein Abgas in den Ansaugtrakt der Brennkraftmaschine zurückgeführt werden kann, so dass nach wie vor bei einem defekten Stellantrieb oder einer Fehlsteuerung der Betrieb der Brennkraftmaschine weiter sichergestellt ist.

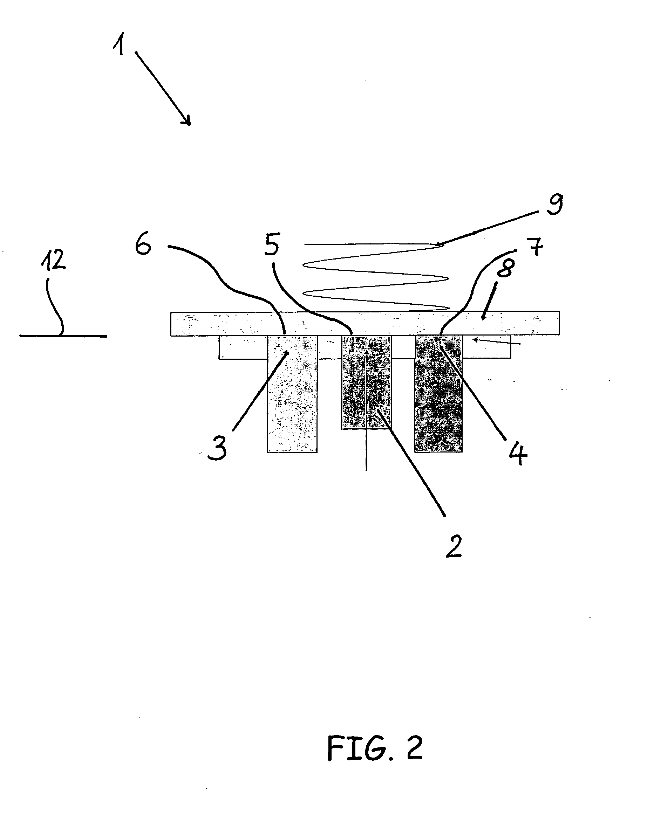

In Figur 2 ist als weiteres alternatives Ausführungsbeispiel dargestellt, dass die Öffnung 5 des Einlasses 2 und die Öffnung 6, 7 des zumindest einen Auslasses 3, 4 auf der gleichen Seite der Dichtscheibe 8 zusammen in einer gemeinsamen Ebene 12 angeordnet sind. Somit sitzen alle Anschlüsse (Einlass 2 und Auslass 3, 4) auf einer Seite der Dichtscheibe 8. Die Auflagekraft der Dichtung auf die Dichtsitze wird auch hier mittels einer Vorspannung, vorzugsweise wieder durch die Feder 9, gewonnen. Von Vorteil ist dabei, dass sämtliche Toleranzen des Systems nach oben (bei Betrachtung der Figur 2) ausgeglichen werden können und nur die Oberflächenbeschaffenheit von Dichtfläche und Dichtsitzen der Öffnungen 5, 6, 7 über die Dichtheit des Systems entscheiden. Dadurch kann das erfindungsgemäße Abgasrückführventil 1 wesentlich einfacher und dementsprechend kostengünstiger entwickelt und realisiert werden.

Wie schon aus dem Stand der Technik bekannt, wird die Dichtscheibe über einen Stellantrieb in Abhängigkeit von Betriebsparametern der Brennkraftmaschine, die mittels eines Steuergerätes und entsprechenden Sensoren erfasst und aufbereitet werden, bewegt. Die Bewegung der erfindungsgemäßen Dichtscheibe 8 kann sowohl linear als auch rotatorisch erfolgen. Von besonderem Vorteil ist im vorliegenden Fall die rotatorische Bewegung und die Ausgestaltung des Abgasrückführventils 1 als Rotationsventil. Über die Geometrie der Kanäle des Einlasses 2 und der Auslässe 3, 4 kann die funktionale Kennlinie des Abgasrückführventils und damit die Abgasrückführung in Abhängig von den Betriebsparametern der Brennkraftmaschine sehr genau eingestellt werden.

In besonders vorteilhafter Weise ist die Dichtscheibe über eine Kupplung mit dem Stellantrieb gekuppelt, so dass im Falle des Ausfalles oder einer Fehlfunktion des Stellantriebes die Dichtscheibe von dem Stellantrieb abgekoppelt werden kann. In einem solchen Fall wird die Vorspannung mittels der Feder 9 auf die Dichtscheibe 8 wirksam, so dass die Öffnungen 5, 6, 7 verschlossen werden, um die Abgasrückführung zu unterbinden und trotzdem den weiteren Betrieb der Brennkraftmaschine zu gewährleisten.

Zur Realisierung eines kleinen Stellantriebes, der möglichst wenig Bauraum einnimmt, der kostenintensiv ist und der einen geringen Energieverbrauch aufweist, ist die Kupplung über ein Getriebe mit dem Stellantrieb verbunden. Dies hat nach wie vor den Vorteil, dass im Falle von Fehlfunktionen des Stellantriebes eine Abkopplung der Dichtscheibe 8 über die Kupplung 8 von dem Stellantrieb gewährleistet ist, wobei gleichzeitig der vorstehend beschriebene kleine Stellantrieb zum Einsatz kommen kann.

In besonders vorteilhafter Weise ist die Kupplung als elektrisch erregbare Magnetkupplung ausgebildet. Dies hat den Vorteil, dass sich die Kupplung sehr gut steuern lässt, wobei zur Steigerung dieses Effektes in einer weiteren vorteilhaften Ausgestaltung die elektrisch erregbare Magnetkupplung als hysterese Kupplung ausgebildet ist. Diese hysterese Kupplung bietet den Vorteil eines konstanten Drehmomentes in dem bestromten Zustand. Nach Wegfall der Spannung (zur Realisierung der "Fail Safe-Funktion") geht das Übertragungsmoment gegen Null und ist folglich nicht mehr vorhanden. Somit wird der komplette Antriebsstrang von der Dichtscheibe 8 abgekoppelt und ermöglicht somit die gewünschte "Fail Safe-Funktion" in Form einer kleinen Rückstellfeder an der Dichtscheibe 8. Von besonderem Vorteil ist dabei, dass die Rückstellkräfte für diese Funktion gering gehalten werden können und damit das Abtriebsmoment nicht übermäßig belasten.

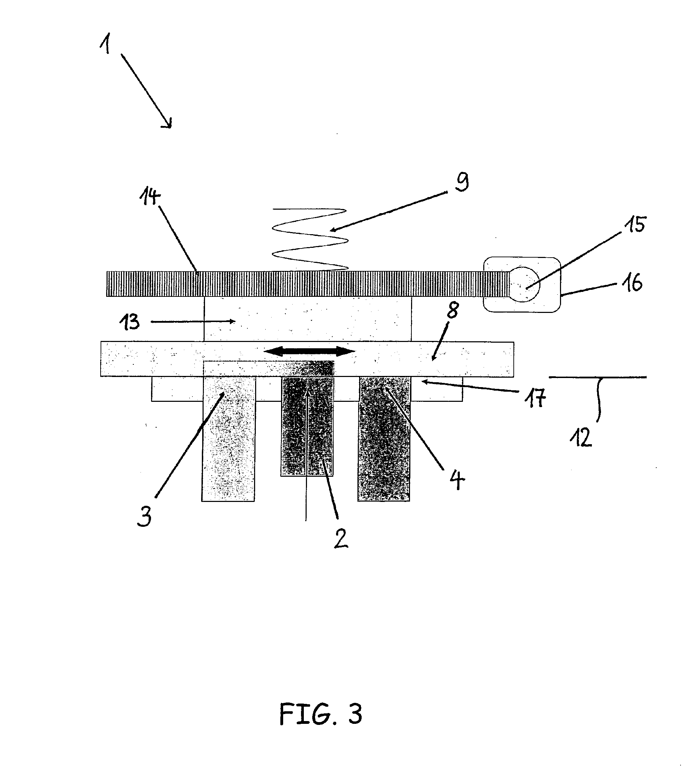

In der Figur 3 ist diese Situation dargestellt, wobei mit 13 die Kupplung, die vorzugsweise als eine elektrisch erregbare magnetische hysterese Kupplung ausgebildet ist, bezeichnet ist. Mit dieser Kupplung 13 ist ein Antriebsritzel 14 verbunden, welches von einem Zahnrad 15, vorzugsweise ein Schneckenrad, beaufschlagt wird. Das Antriebsritzel 14 bildet dabei zusammen mit dem Zahnrad 15 ein einfach aufgebautes und kompaktes Getriebe, vorzugsweise ein Untersetzungsgetriebe. Dabei sitzt das Zahnrad 15 auf dem Stellantrieb, vorzugsweise ein elektrischer Stellmotor 16, wobei der Stellantrieb auch hydraulisch oder pneumatisch wirkend ausgebildet sein kann. Das bedeutet, dass sich auf der Antriebsseite der Kupplung 13 (hysterese Kupplung) sich das Antriebsritzel 14 befindet, welches über ein Getriebe, vorzugsweise ein Schneckengetriebe mit einem kleinen elektrischen Stellmotor 16 angetrieben werden kann. Der Vorteil dabei ist, dass ein im Stand der Technik bekanntes aufwendiges Planetengetriebe entfallen kann und zusätzlich das Antriebselement kein Haltemoment erzeugen muss. Die Stromaufnahme für den Stellmotor (oder alternativ die Energieaufnahme des pneumatischen oder hydraulischen Stellantriebes) ist somit deutlich reduziert und bereitet auch keine Probleme mit der Verlustleistungswärme.

In einer weiteren Ausgestaltung der Erfindung ist der Dichtscheibe 8 ein Sensor zur Erfassung der Position der Dichtscheibe 8 zugeordnet. Durch die Positionierung beispielsweise eines Target-Magneten direkt an der Dichtscheibe 8 und die Erfassung der Position dieses Target-Magneten mittels eines berührungslos wirkenden Sensors, vorzugsweise einem Hall-Sensor, wird die Position des Stellantriebes, insbesondere der Dichtscheibe 8, direkt und absolut gemessen. Verbautoleranzen, Spannungsausfall, Fail Safe-Funktion und dergleichen beeinflussen dabei in vorteilhafter Weise das Messergebnis nicht. Das bedeutet, dass das Steuergerät, an welches der Positionssensor angeschlossen ist, jederzeit die erforderlichen Informationen über die Position der Dichtscheibe 8 innerhalb des Gehäuses des Abgasrückführventils 1 erhält und diese bei der Berechnung des zurückzuführenden Anteiles von Abgas in den Ansaugtrakt der Brennkraftmaschine mitberücksichtigt werden können. Außerdem kann dadurch in vorteilhafter Weise auch ein Ausfall oder eine Fehlfunktion des Positionssensors berücksichtigt werden, indem der Stellantrieb in einem solchen Fall stromlos geschaltet wird und damit die Abgasrückführung sofort unterbrochen werden kann, wobei gleichzeitig der weitere Betrieb der Brennkraftmaschine sichergestellt ist.

Insgesamt bietet die Erfindung somit die folgenden Vorteile:
geringer Aufwand als herkömmliche Systeme,
kein Haltemoment durch Stellantrieb notwendig,
geringe Rückstellkräfte für "Fail Safe-Funktion",
wesentlich kleinerer Stellantrieb notwendig,
reduzierte Verlustleistung,
reduzierte Eigenerwärmung,
Entfall eines Planetengetriebes,
definiertes Überlastmoment,
starke Vereinfachung der Dichtgeometrien,
keine funktionskritischen Temperaturausdehnungen am Dichtelement,
fehlertolerant gegen Verbautoleranzen,
Kennlinien besser an die gewünschte Applikation (Auslegung der Brennkraftmaschine) anpassbar,
deutliche Reduzierung der Energieaufnahme des Stellantriebes,
kompakte Bauweise des Abgasrückführventils.

### Bezugszeichenliste

- 1.: Abgasrückführventil
- 2.: Einlass
- 3.: Auslass
- 4.: Auslass
- 5.: Öffnung (des Einlasses 2)
- 6.: Öffnung (des Auslasses 3)
- 7.: Öffnung (des Auslasses 4)
- 8.: Dichtscheibe (8)
- 9.: Feder
- 10.: Ebene der Öffnung 5 des Einlasses 2
- 11.: Ebene der Öffnungen 5, 6 der Auslässe 3, 4
- 12.: gemeinsame Ebene
- 13.: Kupplung
- 14.: Antriebsritzel
- 15.: Zahnrad
- 16.: Stellmotor
- 17.: Positionssensor

## Patentansprüche

1. Abgasrückführventil (1) einer Brennkraftmaschine, das ein Gehäuse mit einem Einlass (2) für die Zufuhr von Abgas der Brennkraftmaschine und mit zumindest einem Auslass (3, 4) für die Rückführung eines Teiles des Abgases in die Verbrennungsluftzufuhr der Brennkraftmaschine aufweist, wobei eine Verbindung zwischen dem Einlass (2) und dem zumindest einen Auslass (3, 4) von einem Ventilkörper freigegeben oder unterbrochen werden kann und ein Stellantrieb vorgesehen ist, der den Ventilkörper bewegt, um die Verbindung zwischen dem Einlass (2) und dem zumindest einen Auslass (3, 4) freizugeben oder zu unterbrechen, **dadurch gekennzeichnet, dass** die Öffnung (5) des Einlasses (2) und die Öffnung (6, 7) des zumindest einen Auslasses (3, 4) in Ebenen (10, 11) planparallel zueinander oder in einer Ebene (12) angeordnet sind und der Ventilkörper als eine Dichtscheibe (8) ausgebildet ist, die dazu ausgebildet ist, die Öffnung (5) des Einlasses (2) und die Öffnung (6, 7) des zumindest einen Auslasses (3, 4) freizugeben oder zu verschliessen, um die Verbindung zwischen dem Einlass (2) und dem zumindest einen Auslass (3, 4) freizugeben oder zu unterbrechen.

2. Abgasrückführventil (1) nach Anspruch 1, **dadurch gekennzeichnet, dass** die Öffnung (5) des Einlasses (2) auf der einen Seite der Dichtscheibe (8) und die Öffnung (6, 7) des zumindest eines Auslasses (3, 4) auf der anderen Seite der Dichtscheibe (8) angeordnet ist.

3. Abgasrückführventil (1) nach Anspruch 1, **dadurch gekennzeichnet, dass** die Öffnung (5) des Einlasses (2) und die Öffnung (6, 7) des zumindest eines Auslasses (3, 4) auf der gleichen Seite der Dichtscheibe (8) angeordnet sind.

4. Abgasrückführventil (1) nach Anspruch 1, 2 oder 3, **dadurch gekennzeichnet, dass** die Dichtscheibe (8) vorgespannt ist.

5. Abgasrückführventil (1) nach einem der vorhergehenden Ansprüche, **dadurch gekennzeichnet, dass** die Dichtscheibe (8) aus einem Keramikwerkstoff gebildet ist.

6. Abgasrückführventil (1) nach einem der vorhergehenden Ansprüche, **dadurch gekennzeichnet, dass** die Dichtscheibe (8) über eine Kupplung (13) mit dem Stellantrieb gekuppelt ist.

7. Abgasrückführventil (1) nach Anspruch 6, **dadurch gekennzeichnet, dass** die Kupplung (13) über ein Getriebe mit dem Stellantrieb verbunden ist.

8. Abgasrückführventil (1) nach Anspruch 6 oder 7, **dadurch gekennzeichnet, dass** die Kupplung (13) als elektrisch erregbare Magnetkupplung ausgebildet ist.

9. Abgasrückführventil (1) nach Anspruch 8, **dadurch gekennzeichnet, dass** die elektrisch erregbare Magnetkupplung als Hysteresekupplung ausgebildet ist.

10. Abgasrückführventil (1) nach einem der vorhergehenden Ansprüche, **dadurch gekennzeichnet, dass** der Dichtscheibe (8) ein Sensor (17) zur Erfassung der Position der Dichtscheibe (8) zugeordnet ist.
